# EUROPÄISCHE PATENTANMELDUNG

(11) **EP 3 460 978 A1**
(43) Veröffentlichungstag der Anmeldung: **27.03.2019**
(21) Anmeldenummer: 18191368.2
(22) Anmeldetag: 29.08.2018
(51) Int. Cl.: H02M 7/06, H02H 7/12, H02H 9/04, H02M 1/42, H02M 1/44, H02M 1/12

(54) **ELEKTRISCHE SCHALTUNGSANORDNUNG ZUR EINGANGSSCHUTZBESCHALTUNG EINES SCHALTNETZTEILS UND SCHALTNETZTEIL**

(30) Priorität: 26.09.2017 DE 102017217132
(71) Anmelder: Bender GmbH & Co. KG, 35305 Grünberg (DE)
(72) Erfinder: SCHÄFER, Oliver, 35305 Grünberg (DE)
(74) Vertreter: advotec.

(57) **Zusammenfassung**

Die Erfindung betrifft eine elektrische Schaltungsanordnung zur Eingangsschutzbeschaltung eines Schaltnetzteils, mit einer eingangsseitig an einer Netzspannung anliegenden Überspannungsschutzschaltung, an die als Entstörelement eine stromkompensierte Drosselspule angeschlossen ist, die mit einer Gleichrichterschaltung verbunden ist, welche ausgangsseitig einen Energiespeicher aufweist.

Durch schaltungstechnische Modifikationen wie der Einsatz von zwei Varistoren als Überspannungsschutz und durch die Verwendung geeigneter Schaltungselemente wie Silizium-Dioden als Gleichrichterelemente und Keramik-Kondensatoren als Energiespeicher ist die Eingangsschutzbeschaltung so gestaltet, dass die Anforderungen, die ein erweiterter Eingangsspanungsbereich an eine Schutzbeschaltung stellt, erfüllt werden.

Des Weiteren betrifft die Erfindung ein Schaltnetzteil mit einer erfindungsgemäßen elektrischen Schaltungsanordnung zur Eingangsschutzbeschaltung.

## Beschreibung

Die Erfindung betrifft eine elektrische Schaltungsanordnung zur Eingangsschutzbeschaltung eines Schaltnetzteils, mit einer eingangsseitig an einer Netzspannung anliegenden Überspannungsschutzschaltung, an die als Entstörelement eine stromkompensierte Drosselspule angeschlossen ist, die mit einer Gleichrichterschaltung verbunden ist, welche ausgangsseitig einen Energiespeicher aufweist.

Des Weiteren betrifft die Erfindung ein Schaltnetzteil mit einer erfindungsgemäßen elektrischen Schaltungsanordnung zur Eingangsschutzbeschaltung.

Um elektrische Geräte, die eine definierte Versorgungsspannung benötigen, mit Energie aus einem Stromversorgungssystem (Stromversorgungsnetz) zu versorgen, werden Netzteile, insbesondere Schaltnetzteile eingesetzt. Diese transformieren eine von dem Stromversorgungsnetz bereitgestellte Netznennspannung (im Folgenden auch als Netzspannung oder Nennspannung bezeichnet), welche als Eingangsspannung an dem Netzteil anliegt, in eine für das elektrische Gerät geeignete Versorgungsspannung. Da sich die weltweit installierten Stromversorgungssysteme unterscheiden und je nach Anwendungsbereich Nennspannungen unterschiedlicher Größe aufweisen können, ist eine Vielzahl von Netzteilen erforderlich, um das breite Spektrum an Nennspannungen abzudecken.

Dem Stand der Technik gemäß haben sich bezogen auf den Eingangsspannungsbereich des Netzteils zwei Gruppen von Netzteilen auf dem Markt durchgesetzt: AC/DC Netzteile für Nennspannungen von 24 V bis 60 V (auch U1-NT genannt) und AC/DC Netzteile für Nennspannungen von 100 V bis 240 V (auch U2-NT genannt).

Diese Netzteile werden auf dem Markt als Einzelgeräte oder Netzteilmodule von verschiedenen Herstellern angeboten.

Dabei weisen diese bekannten Netzteile eine Eingangsschutzbeschaltung auf, die auf den jeweiligen Eingangsspannungsbereich abgestimmt ist, wobei der Dynamikbereich der Eingangsspannung jeweils maximal 4:1 beträgt.

Um einen möglichst hohen Wirkungsgrad zu erzielen, ist man bestrebt, die Verlustleistung der Eingangsschutzbeschaltung so gering wie möglich zu halten.

So wird bei einem U1-NT der Brückengleichrichter mit Schottky-Dioden bestückt, die eine maximale Sperrspannung von 200 V aufweisen. Die Schleusenspannung beträgt hier nur 0.3 V, da bei kleinen Eingangsspannungen von 19.2 V ("24 V - 20 %") und einer Ausgangslast von 10 W bei einem Wirkungsgrad von 70 % ein Eingangsstrom von 0.75 A fließt. Die Verlustleistung über die 2-fache Diodenstrecke beträgt hierbei 0.5 W.

Bei weiteren Impedanzen, wie beispielsweise stromkompensierten Drosseln (Drosselspulen), wird versucht, diese mit einem möglichst kleinen ohmschen Widerstandswert aufzubauen, um keine weiteren zusätzliche Verluste zu verursachen.

Der in der Eingangsschutzbeschaltung ausgangsseitig angeordnete Energiespeicher in Form eines Pufferkondensators ist derart dimensioniert, dass dessen ESR-Widerstand (engl. Equivalent Series Resistance - ESR) nur geringe Verluste bei hohen Schaltströmen erzeugt.

Bei einem U2-NT gelten für die Eingangsschutzbeschaltung hingegen andere Prioritäten. Hier müssen die Bauteile für höhere Spannungen ausgelegt sein, da an dem DC-Zwischenkreis eine Spannung von bis zu 400 V anliegt.

Die Ströme durch die Längselemente sind in diesem Bereich deutlich geringer, z. B. fließen bei einer Eingangsspannung von 100 V und einem Wirkungsgrad von 70 % sowie bei 10 W Ausgansleistung nur 0.14 A.

Schottky-Dioden als Gleichrichterelemente scheiden wegen einer zu kleinen maximalen Sperrspannung von ca. 200 V aus. Daher werden hier bevorzugt Silizium-Brückengleichrichter mit einer Sperrspannung von 1 kV verwendet.

Ein großes Bauraumvolumen nimmt in dem U2-NT der Energiespeicher (Pufferkondensator) ein. Zwar ist aufgrund der relativ kleinen Schaltströme dessen ESR-Widerstand nicht ausschlaggebend, die in einem U2-NT verwendete Bauart des Elektrolytkondensators kann aber wegen der starken Wärmeentwicklung nicht gleichermaßen für ein U1-NT verwendet werden.

In einigen Produktnormen wird eine Stoßspannungsfestigkeit von 4 kV symmetrisch und 2 kV asymmetrisch gefordert. In der Praxis aber sind die meisten Schaltnetzteile nur für geringere Anforderungen mit 2 kV symmetrisch und 1 kV asymmetrisch ausgelegt.

Als weiterer Nachteil der auf dem Markt verfügbaren Netzteile und Netzteilmodule erweist sich deren relativ großes Bauraumvolumen, welches insbesondere im Hinblick auf eine Geräteintegration hinderlich ist.

Es bleibt also festzustellen, dass bislang für den Markt zwei Netzteilvarianten produziert werden mussten, deren jeweilige Eingangsschutzbeschaltung entweder den unteren (U1-NT) oder den oberen Netzspannungsbereich (U2-NT) abdeckt. Dementsprechend verdoppelt sich für die Hersteller das Geräteportfolio, verbunden mit erhöhten Kosten, beispielsweise für Entwicklung, Fertigung, Lagerhaltung und Vertrieb.

Der vorliegenden Erfindung liegt somit die Aufgabe zu Grunde, eine Eingangsschutzbeschaltung für ein Schaltnetzteil zu entwickeln, welche einen möglichst weiten Bereich an Netznennspannungen verarbeiten kann und zudem ein geringes Bauraumvolumen aufweist.

Diese Aufgabe wird für eine elektrische Schaltungsanordnung gemäß dem Oberbegriff des Anspruchs 1 dadurch gelöst, dass die Überspannungsschutzschaltung durch einen ersten und einen zweiten Varistor gebildet wird, wobei der erste Varistor vor der stromkompensierten Drosselspule und der zweite Varistor nach der stromkompensierten Drosselspule angeordnet ist, dass die stromkompensierte Drosselspule so dimensioniert ist, dass sie einen möglichst geringen ohmschen Widerstand und eine möglichst hohe Induktivität aufweist, dass die Gleichrichterschaltung Silizium-Dioden mit einem mittleren Durchlassstrom von mindestens 5 A aufweist, dass der Energiespeicher als Keramik-Kondensator ausgeführt ist und dass als Überstromschutzeinrichtung durch eine Vergussmasse abgedeckte Leiterbahnsicherungen in eine Leiterplatte integriert sind.

Der Grundgedanke der vorliegenden Erfindung beruht in vorteilhafterweise darauf, die Eingangsschutzbeschaltung durch schaltungstechnische Modifikationen und durch die Verwendung geeigneter Schaltungselemente so zu gestalten, dass die Anforderungen, die ein erweiterter Eingangsspanungsbereich an eine Schutzbeschaltung stellt, erfüllt werden.

Durch die Verwendung von zwei Varistoren werden transiente Überspannungen der anliegenden Netzspannung begrenzt. Die Anordnung eines ersten Varistors vor und eines zweiten Varistors nach der stromkompensierten Drosselspule ermöglicht es, die Anforderungen an eine normativ geforderte 4 kV-Stoßspannungsfestigkeit ohne zusätzliche externe Bauelemente zu erfüllen.

Zur Unterdrückung der durch schnelle Schaltvorgänge in Verbindung mit parasitären Kapazitäten und parasitären Induktivitäten hervorgerufenen Funkstörspannungen wird als Entstörelement eine stromkompensierte Drosselspule eingesetzt.

Die stromkompensierte Drosselspule weist einen möglichst geringen ohmschen Widerstand und eine möglichst hohe Induktivität auf. Dies wird durch einen entsprechend großen Leiterquerschnitt der Kupferwicklung und ein Kernmaterial mit hoher Permeabilität erreicht. Damit sind bei gleichzeitig kompakter Bauform der Spannungsabfall und die daraus resultierenden ohmschen Verluste gering.

In der Gleichrichterschaltung werden Silizium-Dioden mit einem mittleren Durchlassstrom von mindestens 5 A verbaut. Die Auslegung auf 5 A stellt für die vorliegende Anwendung eine bewusste Überdimensionierung dar, dafür aber ist - im Vergleich zu Dioden-Typen mit einem mittleren Durchlassstrom von 1 A im gleichen Gehäuse, die für die Applikation auch ausreichend wären - die an der Diode anliegende Spannung gemäß Datenblatt für 5-Ampère-Dioden-Typen bei einem Durchlassstrom von z. B. 0.75 A geringer. Dies führt ebenfalls zu einer geringeren Verlustleistung, da diese proportional zu dem Produkt aus der an der Diode anliegenden Spannung und dem durch die Diode fließenden Strom ist.

Als Energiespeicher zur Pufferung der Ausgangsspannung der Eingangsschutzbeschaltung werden Keramik-Kondensatoren statt üblicherweise Elektrolyt-Kondensatoren verwendet. Diese weisen einen geringen ESR-Widerstand auf, wodurch auch bei kleinen Eingangsspannungen und somit großen Stromspitzen die Verluste geringgehalten und ein akzeptabler Wirkungsgrad realisiert werden kann.

In eine die Schaltelemente tragende Leiterplatte sind als Überstromschutzeinrichtung Leiterbahnsicherungen integriert, die durch eine Vergussmasse abgedeckt sind. Diese übernehmen den Kurzschlussschutz und weisen gegenüber üblicherweise verwendeten Glassicherungen ein geringeres Bauraumvolumen auf.

Durch schaltungstechnische Maßnahmen und Auswahl geeigneter Bauelemente kann die Verlustleistung insbesondere bei geringen Eingangsspannungen minimiert werden ohne die Spannungsfestigkeit zu beeinträchtigen und ohne das Bauraumvolumen signifikant zu erhöhen Weiterhin umfasst die Erfindung ein Schaltnetzteil, welches die erfindungsgemäße elektrische Schaltungsanordnung zur Eingangsschutzbeschaltung aufweist.

Die erfindungsgemäß ausgestaltete elektrische Schaltungsanordnung ist damit als Bestandteil eines Schaltnetzteils in der Lage, Netzspannungen in einem Bereich von 24 bis 240 V als Eingangsspannung eines Netzteils oder Netzteilmoduls zu verarbeiten. Maximal kann ein Dynamikbereich der Eingangsspannung von 16:1 erreicht werden.

Anstelle von zwei Netzteilvarianten mit jeweils einer speziellen Eingangsschutzbeschaltung für die Eingangsspannungsbereiche von 24 bis 60 V oder von 100 bis 240 V ist nur noch ein Weitbereichs-Schaltnetzteil mit der erfindungsgemäßen elektrischen Schaltungsanordnung erforderlich, um den Netzspannungs-Bereich von 24 bis 240 V abzudecken.

Zur Steuerung des Funktionsablaufs in dem Schaltnetzteil wird vorteilhafterweise eine Power-Factor-Control-Steuerung (PFC-Controller) eingesetzt.

Der PFC-Controller besteht grundsätzlich aus zwei Regelkreisen, wobei ein erster Regelkreis (Stromregelkreis) den Eingangsstrom eines Leistungsfaktor-Vorreglers proportional zum Augenblickswert der Eingangsspannung führt. Wenn dieser Strom der sinusförmigen Eingangsspannung folgt, ist auch der Netzstrom sinusförmig und in Phase mit der Netzspannung, und dementsprechend ist der Leistungsfaktor gleich Eins.

Ein zweiter Regelkreis (Spannungsregelkreis) führt den Effektivwert des Drosselstromes so, dass eine mittlere Ausgangsspannung des Leistungsfaktor-Vorreglers trotz unterschiedlicher Ausgangsleistung konstant bleibt.

Bei der PFC-Topologie kann - im Gegensatz zu einem klassischen Current-Mode-Flyback-Controller - der Energiespeicher mit einer geringeren Kapazität ausgeführt werden. Dies führt zusätzlich auch zu einem geringen Bauraumvolumen.

Weitere vorteilhafte Ausgestaltungsmerkmale ergeben sich aus der nachfolgenden Beschreibung und den Zeichnungen, die eine bevorzugte Ausführungsform der Erfindung an Hand eines Beispiels erläutern. Es zeigen:
- **Fig. 1:**: eine Eingangsschutzbeschaltung eines U1-Netzteils nach dem Stand der Technik,
- **Fig. 2:**: eine Eingangsschutzbeschaltung eines U2-Netzteils nach dem Stand der Technik und
- **Fig. 3:**: eine erfindungsgemäße elektrische Schaltungsanordnung zur Eingangsschutzbeschaltung eines Weitbereichsnetzteils.

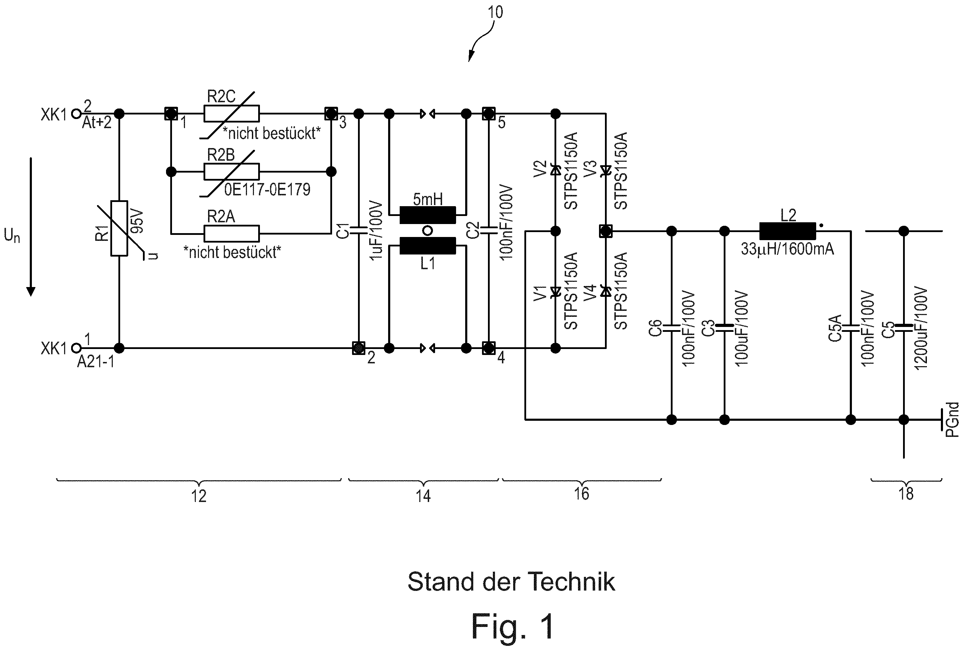

In **Fig. 1** ist eine elektrische Schaltungsanordnung 10 zur Eingangsschutzbeschaltung eines U1-Netzteils nach dem Stand der Technik dargestellt.

Die Schaltungsanordnung 10 umfasst im Wesentlichen vier funktionale Baugruppen, die sich ausgehend von einer eingangsseitig anliegenden Netzspannung Uₙ (Eingangsspannung der Schaltungsanordnung 10) als Schaltkreise aufeinanderfolgender Signalverarbeitungsstufen darstellen lassen.

Eine Überspannungsschutzschaltung 12 wird eingangsseitig mit der Netzspannung Uₙ beaufschlagt. Die Überspannungsschutzschaltung 12 umfasst einen Varistor R1 und gegebenenfalls weitere, teils veränderliche Widerstände, um transiente Überspannungen in der Netzspannung Uₙ zu bedämpfen.

Daran schließt sich als Entstörelement 14 eine stromkompensierte Drosselspule L1 an, mit der hochfrequente Störaussendungen weitgehend unterdrückt werden.

Als nächste Signalverarbeitungsstufe erfolgt in einer Gleichrichterschaltung 16 eine Gleichrichtung mittels eines Brückengleichrichters, der mit Schottky-Dioden V1 bis V4 bestückt ist.

Eine Pufferung der Ausgangsspannung der Eingangsschutzbeschaltung 10 erfolgt mittels eines Energiespeichers 18, der als Elektrolyt-Kondensator C5 ausgeführt ist.

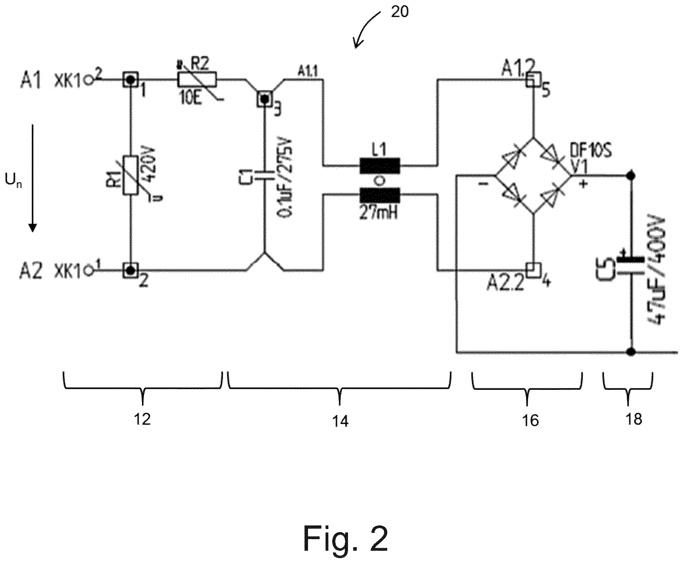

**Fig. 2** zeigt eine elektrische Schaltungsanordnung 20 zur Eingangsschutzbeschaltung eines U2-Netzteils nach dem Stand der Technik.

Diese Schaltungsanordnung 20 für ein U2-Netzteil zeigt den gleichen prinzipiellen Aufbau wie die Schaltungsanordnung 10 für ein U1-Netzteil, bestehend aus einer Überspannungsschutzschaltung 12, einem Entstörelement 14, einer Gleichrichterschaltung 16 und einem Energiespeicher 18.

Allerdings unterliegen die Schaltungselemente anderen schaltungstechnischen Randbedingungen aufgrund der sich unterscheidenden Spannungen und Ströme und sind daher entsprechend den Anforderungen anders dimensioniert.

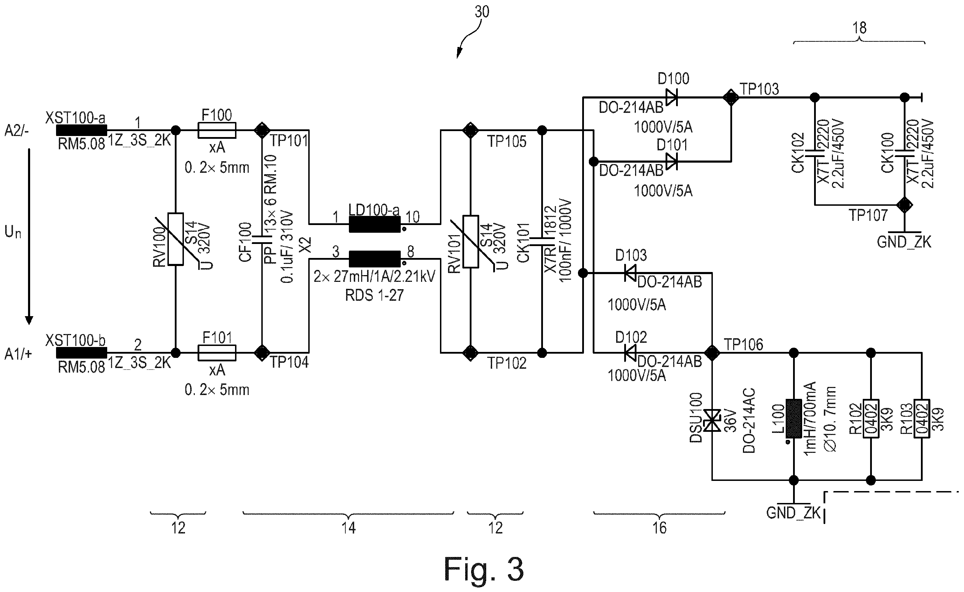

Die **Fig. 3** zeigt eine erfindungsgemäße elektrische Schaltungsanordnung 30 zur Eingangsschutzbeschaltung eines Weitbereichsnetzteils.

Auch hier beruht die Eingangsschutzbeschaltung 30 auf einer Überspannungsschutzschaltung 12, einem Entstörelement 14, einer Gleichrichterschaltung 16 und einem Energiespeicher 18, jedoch sind diese funktionalen Baugruppen schaltungstechnisch modifiziert und mit besonderen Schaltungselementen versehen, um eine Schutzbeschaltung für einen Eingangsspannungsbereich zu ermöglichen, der über den eines U1- bzw. U2-Netzteils hinausgeht.

So ist aus Fig. 3 ersichtlich, dass die Überspannungsschutzschaltung 12 aus einem ersten Varistor RV100 und einen zweiten Varistor RV101 gebildet wird, wobei der erste Varistor RV100 von dem Schaltungseingang, d. h. von der anliegenden Netzspannung Uₙ aus betrachtet, vor der stromkompensierten Drosselspule LD100 und der zweite Varistor RV101 nach der stromkompensierten Drosselspule LD100 angeordnet ist.

Die stromkompensierte Drosselspule LD100 zielt vorrangig auf die Unterdrückung von Gleichtaktstörströmen ab und besteht aus einem hochpermeablen Ringkern, auf den zwei vom Strom gegensinnig durchflossene Wicklungen aufgebracht sind.

Als Ringkerne werden vorzugsweise hochpermeable Mangan-Zink-Ferrite (Werkstoff K7000) verwendet, die im Frequenzbereich von 10 kHz bis 1 MHz betrieben werden und beispielsweise einen Außendurchmesser von 16 mm, einen Innendurchmesser von 9.6 mm und eine Höhe von 6.3 mm aufweisen. Der Al-Wert (Induktivität pro Windungszahl zum Quadrat) eines derartigen Kerns ergibt sich zu 4150 nH.

Hinzu kommt eine weitere Längsinduktivität L100 zur Unterdrückung der Gegentaktstöremissionen, die an einem Ausgang der Gleichrichterschaltung 16 gegen Masse geschaltet ist.

Jede dieser - insgesamt drei - Spulen weist dabei eine Wicklung mit jeweils einem ohmschen Widerstand von 0.5 Ω bis 1 Ω auf wie sich aus folgender Beispielrechnung ergibt:
Ein Schaltnetzteil im Leistungsbereich bis 20 W hat typischerweise einen Wirkungsgrad zwischen 75 bis 85 %, d. h. die gesamte Verlustleistung beträgt 15 bis 25 % der Eingangsleistung. Die Verlustleistung im Eingangskreis sollte 5 % nicht übersteigen, beträgt also ca. ¼ der gesamten Verlustleistung. Ausgehend von einer gewünschten Ausgangsleistung des Schaltnetzteils von 10 W und einem Wirkungsgrad von 80 % ist somit eine Eingangsleistung von 12.5 W erforderlich, woraus sich bei einer Eingangsspannung von 20 V - der Eingangsstrom ist bei kleinen Eingangsspannungen am größten - ein Eingangsstrom Iᵢₙ von 0.625 A ergibt.

Die gesamte Verlustleistung Pᵥ beträgt (12.5 W - 10 W) = 2.5 W. Hieraus errechnet sich ein gesamter ohmscher Widerstand zu R_{Cu} = ¼ * Pᵥ/Iᵢₙ² = 1.6 Ω. Aufgeteilt auf insgesamt drei benötigte Spulen ergibt sich ein ohmscher Wicklungswiderstand von 0.53 Ω pro Spule.

Die Induktivität der aus zwei Spulen bestehenden stromkompensierten Drosselspule LD100 beträgt vorzugsweise 20 mH bis 30 mH je Spule. Die Induktivität der weiteren Längsinduktivität L100 liegt in der Größenordnung von 1 mH.

Die Brückengleichrichter-Schaltung 16 ist aus 1000 V-Silizium-Dioden D100 bis D104 aufgebaut. Diese weisen in absichtlicher Überdimensionierung einen mittleren Durchlassstrom von 5 A auf, um eine möglichst geringe Verlustleistung zu erzeugen.

Ausgangsseitig sind als Energiespeicher 18 zur Pufferung der Ausgangsspannung der Eingangsschutzbeschaltung zwei 450 V-Keramik-Kondensatoren CK100 und CK 102 mit je 2.2 µF verbaut.

Die Schaltungsanordnung weist eingangsseitig als Überstromschutzeinrichtung zwei in eine Leiterplatte integrierte und durch eine Vergussmasse abgedeckte Leiterbahnsicherungen auf. Diese sind vorzugsweise als zwei 0.2 mm * 5 mm verzinnte Lötbahnen ausgeführt, um bei Auftreten eines Kurzschlusses sicher zu trennen.

## Patentansprüche

1. Elektrische Schaltungsanordnung (30) zur Eingangsschutzbeschaltung eines Schaltnetzteils, mit einer eingangsseitig an einer Netzspannung anliegenden Überspannungsschutzschaltung (12), an die als Entstörelement (14) eine stromkompensierte Drosselspule angeschlossen ist, die mit einer Gleichrichterschaltung (16) verbunden ist, welche ausgangsseitig einen Energiespeicher (18) aufweist, **dadurch gekennzeichnet,**
**dass** die Überspannungsschutzschaltung (12) durch einen ersten und einen zweiten Varistor (RV100, RV101) gebildet wird, wobei der erste Varistor (RV100) vor der stromkompensierten Drosselspule (LD100) und der zweite Varistor (RV101) nach der stromkompensierten Drosselspule (LD100) angeordnet ist,
**dass** die stromkompensierte Drosselspule (LD100) so dimensioniert ist, dass sie einen möglichst geringen ohmschen Widerstand und eine möglichst hohe Induktivität aufweist,
**dass** die Gleichrichterschaltung (16) Silizium-Dioden (D100 bis D104) mit einem mittleren Durchlassstrom von mindestens 5 Ampere aufweist,
**dass** der Energiespeicher (18) als Keramik-Kondensator (CK100, CK102) ausgeführt ist und
**dass** als Überstromschutzeinrichtung durch eine Vergussmasse abgedeckte Leiterbahnsicherungen in eine Leiterplatte integriert sind.

2. Schaltnetzteil,
**gekennzeichnet durch**
eine elektrische Schaltungsanordnung zur Eingangsschutzbeschaltung nach Anspruch 1.

3. Schaltnetzteil nach Anspruch 2,
**gekennzeichnet durch**
eine Power-Factor-Control-Steuerung zur Steuerung des Funktionsablaufs.
